# DEMANDE DE BREVET EUROPEEN

(11) **EP 1 137 154 A1**
(43) Date de publication de la demande: **26.09.2001**
(21) Numéro de dépôt: 01400724.9
(22) Date de dépôt: 20.03.2001
(51) Int. Cl.: H02K 9/22, F28F 3/02, B62M 23/02, B62M 7/12, H02K 11/04

(54) **Moteur roue, notamment pour bicyclette avec assistance au pédalage, et bicyclette équipée de ce moteur-roue**

(30) Priorité: 21.03.2000 FR 0003568
(71) Demandeur: Technicrea Recherche Société à responsabilité limitée, 90000 Belfort (FR); Kauffmann, Jean-Marie, 90700 Chatenois-les-Forges (FR); Espanet, Christophe, 25200 Montbeliard (FR)
(72) Inventeur: Espanet, Christophe, 25200 Montbeliard (FR); Bernard, Robert, 68780 Bretten (FR); Kauffman, Jean-Marie, 90700 Chatenois Les Forges (FR)
(74) Mandataire: Pontet, Bernard

(57) **Abrégé**

L'invention concerne un moteur roue, notamment pour bicyclette avec assistance électrique, directement intégré dans une roue avant ou arrière. Le moteur comprend un rotor externe (1) doté d'un flasque rotorique intérieur (17), un stator interne (2) possédant, vis-à-vis du flasque rotorique intérieur, un flasque circulaire latéral (16). Selon l'invention, des moyens électroniques (12) sont montés sur la partie interne du flasque statorique. Pour évacuer de la chaleur, une pluralité de picots (22, 23) est disposée sur la surface interne du flasque rotorique intérieur et sur la surface externe du flasque statorique de façon à brasser la masse d'air contenue dans le volume entre le flasque rotorique intérieur et le flasque statorique.

## Description

La présente invention est relative à un moteur roue synchrone comprenant un rotor externe et un stator interne. Elle trouve une application particulièrement intéressante, mais non exclusivement, dans la conception de bicyclettes avec assistance électrique, communément désignée par vélo électrique. Toutefois l'invention est d'un cadre plus large car elle peut être appliquée à la conception de tout type de moteur nécessitant un confinement particulier pour cause d'étanchéité par exemple.

La bicyclette avec assistance électrique est apparue au début des années 90 d'abord au Japon puis progressivement en Europe. D'une façon générale, les bicyclettes avec assistance électrique sont pour la plupart dérivées de bicyclettes classiques dans lesquelles on couple mécaniquement le moteur au pédalier. La conception d'une bicyclette avec assistance électrique nécessite la prise en compte d'un ensemble de contraintes mécaniques, électromagnétiques, thermiques et économiques liées à la traction électrique de la bicyclette. Parmi ces contraintes, on regarde celles qui portent sur la source d'énergie. Sur une bicyclette, il s'agit nécessairement d'une batterie. La prévention de risques électriques impose une tension maximale de batterie à environ 48 V. En outre, pour atteindre l'autonomie fixée par les besoins quotidiens de l'utilisateur, soit une vingtaine de kilomètres avec des cycles d'accélération de décélération, de vitesse constante, d'ascension, il convient de choisir une batterie à haute densité d'énergie, sans que son coût soit prohibitif, et de minimiser la consommation d'énergie du système complet. On connaît des bicyclettes avec assistance électrique pour lesquelles l'électronique de puissance nécessaire à la commande du moteur se trouve à l'extérieur de la roue, sur le cadre de la bicyclette par exemple. Un tel dispositif est encombrant d'autant plus que les batteries sont généralement installées sur les portes bagages.

La présente invention vise à remédier à cet inconvénient en proposant un moteur roue pour lequel l'électronique de commande est intégrée dans la roue.

L'invention a pour objet un dispositif dans lequel la chaleur engendrée par le moteur roue est convenablement évacuée vers le milieu extérieur.

Un autre objet de l'invention est de concevoir une bicyclette avec assistance électrique dont le rendement et le coût sont optimisés.

Les objets ci-dessus sont atteints avec un moteur roue, notamment pour bicyclette avec assistance électrique, comprenant un rotor externe comportant deux flasques rotoriques respectivement intérieur et extérieur, et un stator interne possédant, en regard dudit flasque rotorique intérieur, un flasque statorique supportant sur sa périphérie une partie radiale comportant un circuit magnétique statorique pourvu d'enroulements.

Suivant l'invention, le moteur roue comprend en outre un onduleur d'alimentation des enroulements statoriques, qui sont montés sur la face interne du flasque statorique, et deux ensembles de picots respectivement rotoriques et statoriques s'étendant respectivement depuis la surface interne du flasque rotorique intérieur et depuis la surface externe du flasque statorique, lesdits ensembles de picots respectivement rotoriques et statoriques étant disposés de façon à réduire la barrière thermique existant entre le flasque rotorique intérieur et le flasque statorique.

Avec la présente invention, il devient possible d'intégrer dans le volume confiné du rotor interne d'un moteur-roue un onduleur de puissance complet, tout en respectant les limites de température maximale préconisées pour les composants de puissance de cet onduleur.

L'intégration du moteur avec ses moyens électroniques dans une roue avant ou arrière de la bicyclette offre alors un intérêt économique indéniable.

Ainsi un ensemble (kit) incluant une roue motorisée, des moyens électroniques d'alimentation du moteur et une batterie, peut être vendu séparément pour équiper une bicyclette standard afin de la transformer en bicyclette avec assistance électrique.

L'invention présente une intégration directe dans la roue avant ou arrière ne nécessitant pas de réducteur. Cette solution est séduisante car elle libère de la place sur la bicyclette et évite de dégrader l'esthétique.

Selon une caractéristique avantageuse de l'invention, les picots du flasque rotorique intérieur et les picots du flasque statorique possèdent une longueur supérieure à la moitié de l'épaisseur de l'espace formé entre le flasque rotorique intérieur et le flasque statorique de telle sorte que les picots respectivement statoriques et rotoriques s'imbriquent tout en permettant le mouvement de rotation du rotor par rapport au stator. Cette disposition a pour effet d'abaisser la barrière thermique que constitue la couche d'air présente dans le volume mentionné ci-dessus (par brassage de l'air entre les picots).

De préférence, les picots respectivement rotoriques et statoriques s'étendent perpendiculairement respectivement au flasque rotorique intérieur et au flasque statorique.

Avantageusement, les picots sur le flasque rotorique intérieur et sur le flasque statorique peuvent former un ensemble de cercles concentriques de telle sorte que les cercles disposés sur ledit flasque s'intercalent dans les cercles disposés sur ledit flasque rotorique intérieur.

Selon un mode particulier de mise en oeuvre de l'invention, le rotor est en forme de cylindre aplati comprenant un flasque rotorique extérieure. Ce cylindre est préférentiellement étanche de façon à protéger les éléments internes du moteur.

Par ailleurs, des ailettes sont perpendiculairement disposées sur la surface interne du flasque rotorique extérieure. Les ailettes sont inscrites dans des plans passant par le centre du flasque rotorique extérieur. La longueur des ailettes peut être de choisie de telle sorte qu'elles n'atteignent pas le bord extérieur du flasque rotorique extérieur.

Selon une autre caractéristique avantageuse de l'invention, les picots et les ailettes sont en matériau métallique, par exemple de l'aluminium.

L'invention concerne également une bicyclette comprenant des moyens d'assistance au pédalage, des moyens pour commander ces moyens d'assistance et des moyens de stockage d'énergie électrique tels que des batteries. Selon l'invention, les moyens d'assistance peuvent comprendre au moins un moteur roue. Les moyens pour commander les moyens d'assistance peuvent par exemple être des interrupteurs reliant ces moyens d'assistance au moyen de stockage.

D'autres avantages et caractéristiques de l'invention apparaîtront à l'examen de la description détaillée d'un mode de mise en oeuvre nullement limitatif, et des dessins annexés, sur lesquels :
- la figure 1A est une vue en coupe d'un premier exemple de réalisation d'un moteur selon l'invention, intégré dans une roue arrière d'une bicyclette;
- la figure 1B est une vue en coupe d'un second exemple de réalisation d'un moteur selon l'invention ;
- la figure 2 est une vue de la face externe du flasque statorique sans les bobinages;
- la figure 3a est une vue de la face interne du flasque rotorique intérieur;
- la figure 3b est une vue de la face interne du flasque statorique sans les bobinages;
- la figure 4 est une vue de la face interne de la paroi latérale supérieure du rotor; et
- la figure 5 est un schéma de principe illustrant l'électronique de commande du moteur.

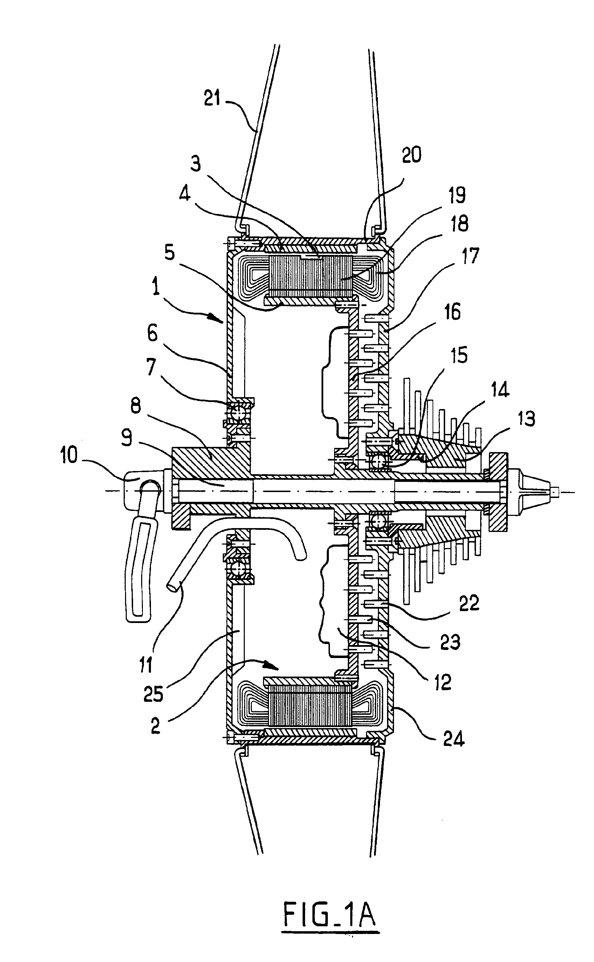

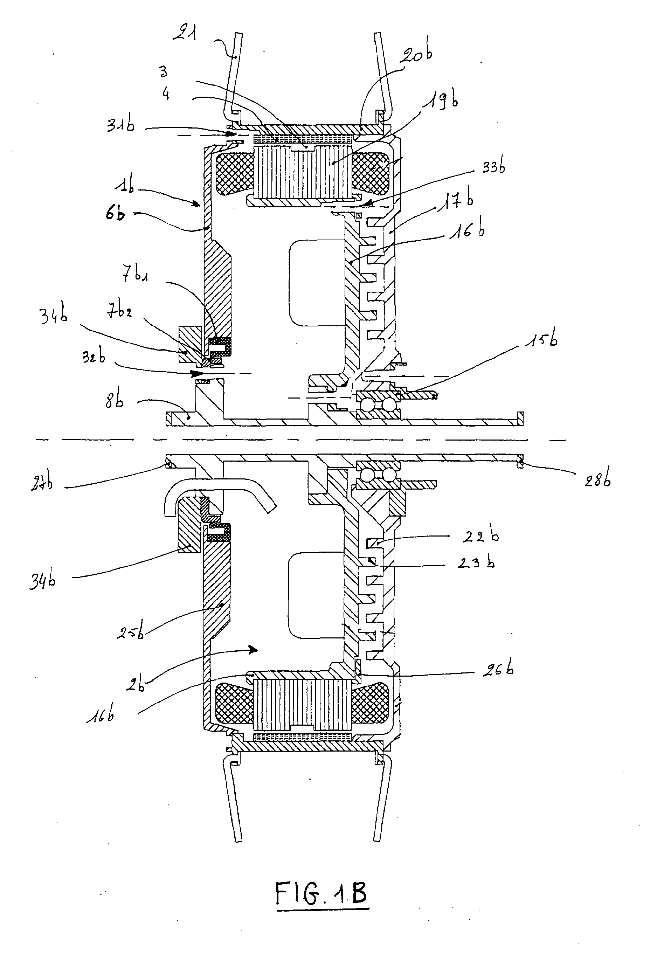

En se référant à la figure 1A, un moteur synchrone selon l'invention comporte, selon un premier exemple de réalisation, un rotor 1 sur lequel sont connectés les rayons 21 de la bicyclette. Le moteur est idéalement placé dans la roue arrière d'une bicyclette et est alimenté par une batterie Ni-Cd (non représentée) de tension égale à 36 V et de capacité égale à 10 Ampère-heure. Le moteur est composé du rotor 1 en rotation avec les rayons 21 et d'un stator 2 fixe.

Le rotor 1 est en forme d'un cylindre de diamètre plus grand que la hauteur. Il est constitué d'un flasque rotorique intérieur 17 et d'un flasque rotorique extérieur 6, et d'une bande radiale 20 qui intègre des aimants 4 collés sur la face interne. Le moteur travaille en attaque directe, sans réducteur, et possède un couple massique élevé grâce à l'utilisation d'aimants permanents de type Néodyme (Nd), Fer (Fe), Bore (B). Vingt-six aimants sont repartis de façon alternée sur la bande radiale 20 de façon classique pour la réalisation d'un moteur synchrone. Le rotor 1 peut tourner autour du moyeu central 8 au moyen d'un ensemble de roulement à billes 7 et 15. Le moyeu central 8 enveloppe un axe 9, l'ensemble étant fixé au moyen d'un blocage rapide 10. L'ensemble de pignons 13, en roue libre sur un support 14, permet d'entraîner le rotor 1 en rotation lorsque l'utilisateur de la bicyclette pédale.

A l'intérieur du rotor 1 se trouve le stator 2 solidaire du moyeu central 8. Le stator 2 comprend un flasque statorique 16 et une bande radiale 5 portant un empilement de tôles magnétiques dentelées 19 sur lesquelles on réalise des bobinages de cuivre 18. Un logement 24 réalisé sur le bord du flasque rotorique intérieur 17 permet d'accueillir les protubérances des bobinages. Le flasque statorique 16 est situé du côté du flasque rotorique intérieur 17 en formant un espacement rempli d'air entre les deux parois 16 et 17. L'électronique 12 de commande des bobinages 18 est disposée sur la face interne du flasque statorique 16 et comprend un onduleur de tension régulé en courant et fournissant des quasi-créneaux de courant. La régulation de courant est notamment obtenue grâce à des signaux renvoyés par trois capteurs de position à effet hall 3 disposés sur les tôles magnétiques 19. L'élément 11 représente le fil d'alimentation de l'électronique de commande à partir de la batterie de 36 V.

Le fonctionnement du moteur et son alimentation produit évidemment de la chaleur qu'il est nécessaire d'évacuer de façon naturelle car une convection forcée entraînerait une consommation d'énergie supplémentaire, néfaste à l'autonomie du moteur ou à la masse des batteries. La chaleur produite par effet joule dans les bobinages 18 est principalement évacuée à travers l'entrefer du moteur entre les aimants 4 et la tôle magnétique 19, puis par conduction à travers la bande radiale 20 du rotor. La chaleur présente sur le flasque 16 est essentiellement due aux pertes dans les composants de puissance (transistors de type IGBT, MOSFETs ou équivalents) de l'onduleur.

Pour refroidir le flasque 16, on utilise deux dispositifs de refroidissement. Le premier dispositif est constitué d'une pluralité de picots 22, 23, en matériau métallique bon conducteur de la chaleur tel que par exemple l'aluminium ou le cuivre, disposés et insérés sur la face interne du flasque rotorique intérieur 17 et sur la face externe du flasque 16. Chaque picot est disposé de façon transverse à la paroi sur laquelle elle est fixée et possède une longueur supérieure à la moitié de l'espacement formé entre les deux parois 16 et 17. Les deux ensembles de picots 22 et 23 s'imbriquent l'un dans l'autre sans que les sommets des picots ne buttent contre la paroi antagoniste 16 ou 17. A titre d'exemple, chaque picot peut être un cylindre de dix mm de hauteur et de trois mm de diamètre. Lorsque le rotor 1 tourne, les picots 22 et 23 brassent l'air et créent une turbulence en augmentant ainsi le transfert thermique entre le flasque statorique 16 et le flasque rotorique intérieur 17 qui évacue la chaleur vers l'extérieur.

Un second exemple de réalisation d'un moteur 1b selon l'invention est illustré par la figure 1B sur laquelle les références d'éléments ou de composants déjà présents dans la figure 1A ont été conservées. Il est à noter que sur la figure 1B, la roue libre 13, l'axe 9 et le blocage 10 de la figure 1A ne sont pas représentés.

Dans ce second exemple de réalisation, le roulement 7 de la figure 1A a été remplacé par un frotteur constitué de deux parties 7b1, 7b2 respectivement solidaires du rotor et du stator du moteur 1b. De plus, le roulement 15 de la figure 1A a été remplacé par un roulement à double rangée de billes 15b. La pièce 7b1 est par exemple en caoutchouc et assure une étanchéité de la liaison mécanique en frottant sur la partie 7b2 qui est par exemple en acier. Cette configuration présente l'avantage d'être moins onéreuse, pour une fabrication en série, que la configuration représentée en figure 1A dans la mesure où le roulement à double rangée de billes 15b et le frotteur 7b1, 7b2 sont des composants courants standards.

Par ailleurs, le flasque statorique et la bande radiale sont regroupés en une seule et même pièce 16b pourvue de picots 23b qui font partie intégrante du flasque statorique et qui sont constitués du même matériau bon conducteur de la chaleur, par exemple de l'aluminium. Cette configuration particulière présente, par rapport à la configuration représentée en figure 1A, trois avantages :
- suppression de la résistance thermique de contact existant entre le flasque statorique et les picots, améliorant ainsi l'efficacité thermique des échanges de chaleur,
- réduction importante des coûts de réalisation et de montage, du fait de la suppression d'usinage de précision (dans le cas d'une réalisation en petite série),
- meilleure tenue mécanique .

Une couronne 26b et des vis 33b, par exemple en nombre égal à 8, sont prévues pour assurer un maintien parfait du paquet de tôles 19 qui est soumis à un couple de réaction de rotation élevé lors des phases de démarrage ou de franchissement d'une pente importante.

Il est à noter que dans ce second exemple de réalisation, l'intégration en une seule pièce 16b du flasque statorique et de la bande radiale contribue avantageusement à la solidité mécanique et à la faisabilité industrielle du moteur selon l'invention, en ne nécessitant plus une liaison par vissage entre le flasque statorique et la bande radiale.

Le flasque rotorique 17b du moteur 1b selon l'invention possède, comme le flasque statorique 16b, des picots 22b faisant partie intégrante. Comme le flasque rotorique 17b transmet l'ensemble de la charge de la roue au moyeu, l'épaisseur de ce flasque rotorique doit être déterminée en conséquence. Il en est de même pour la surface de liaison entre le flasque rotorique 17b et la bande radiale rotorique 20b qui doit être suffisante pour assurer une bonne rigidité mécanique de l'ensemble.

Le moteur 1b selon l'invention comprend en outre un moyeu 8b comportant une partie 28b pour recevoir un système de roue libre (non représenté) et une partie 27b sur laquelle une pièce 34b est fixée par des vis 32b, cette pièce 34b faisant office de bras de maintien du stator 2b sur le cadre du cycle. Ce bras est destiné à être fixé par bride sur le tube horizontal inférieur gauche du cadre du cycle. Par ailleurs, le flasque rotorique 6b est également pourvu d'ailettes de refroidissement 25b.

Il est à noter que le poids du moteur dans la configuration de la figure 1B est globalement identique à celui correspondant à la configuration de la figure 1A.

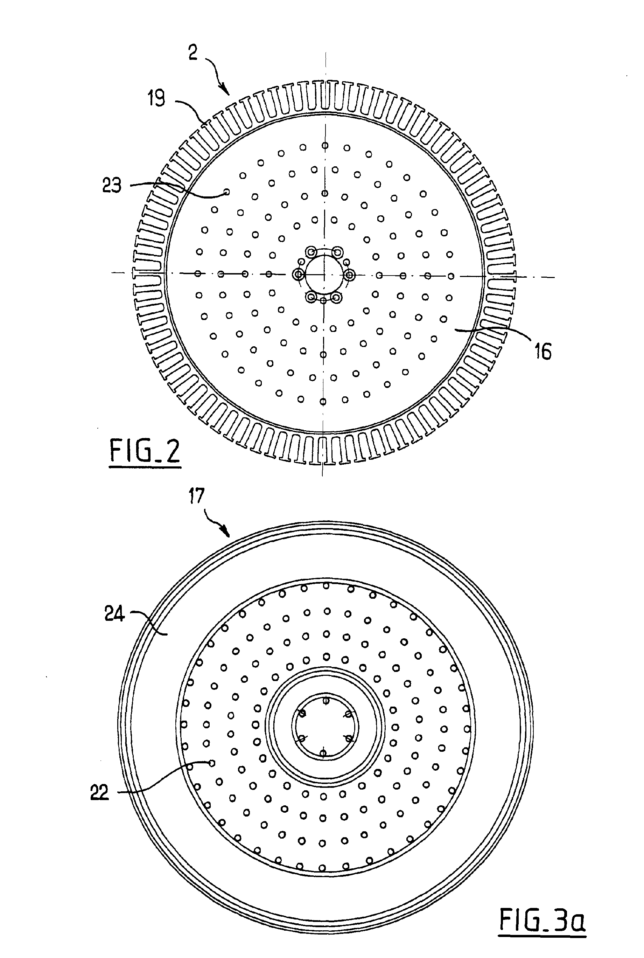

La figure 2 illustre un exemple de disposition des picots 23 sur la face externe du flasque statorique 16 qui comporte par ailleurs sur sa périphérie les tôles magnétiques statoriques 19 du moteur. Les picots sont rangés en quatre cercles équidistants et concentriques. Chaque cercle comporte des picots équidistants. La figure 3a représente la face interne du flasque rotorique intérieur 17. Le logement 24 se trouve à la périphérie pour accueillir les protubérances des bobinages (mieux vu sur la figure 1). Les picots 23 sont disposés de manière semblable à celle des picots 22 sur la figure 2, mais les quatre rangées de picots 23 sont destinées à s'intercaler dans les quatre rangés des picots 22 de telle sorte que la rotation du rotor par rapport au stator reste possible et la longueur des picots peut être supérieure à la moitié de l'espacement entre le flasque 16 et le flasque rotorique intérieur 17.

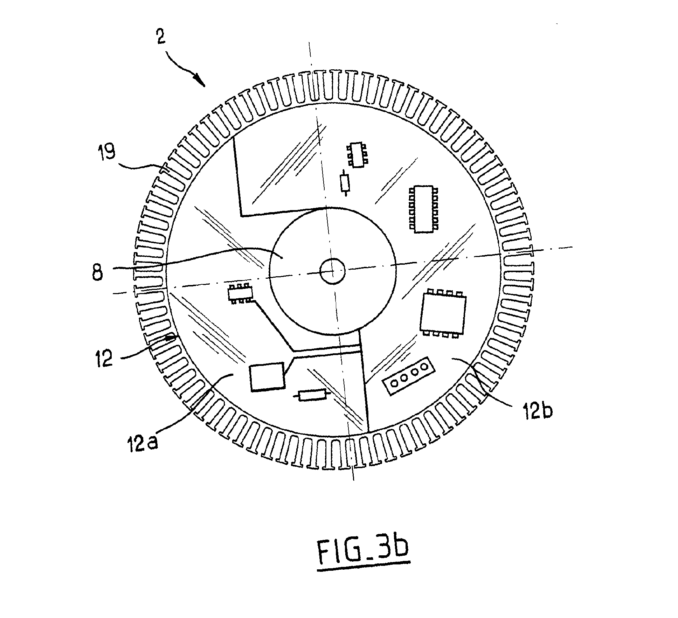

Sur la figure 3b on voit la localisation de l'électronique de commande 12 autour du moyeu central 8. L'électronique de commande 12 comprend une partie 12a fixée à même le flasque 16 et portant les composants électroniques de puissance, et une partie 12b recouvrant en partie la précédente et portant des composants logiques pour la commande.

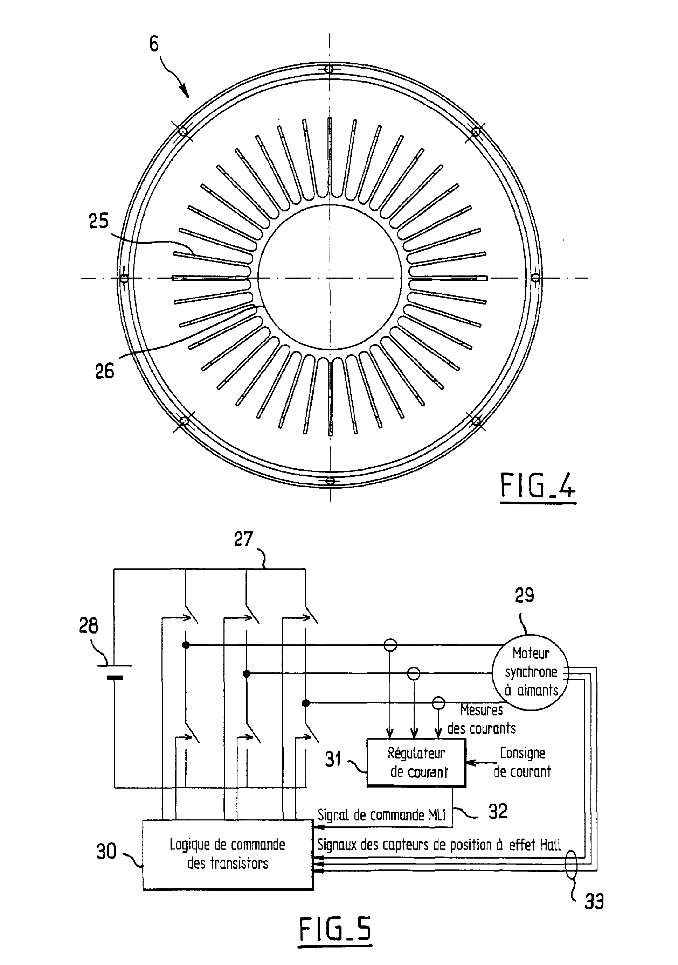

Le second dispositif pour évacuer la chaleur dans le stator est réalisé au moyen d'une pluralité d'ailettes 25, visible sur les figures 1A, 1B et 4, de forme globalement parallélépipédique rectangulaire de faible épaisseur avec une découpe oblique sur un bord extérieur. Ils sont disposés sur la face interne du flasque rotorique extérieur 6, les grandes faces étant perpendiculaires à ce flasque. En référence à la figure 4, un trou est prévu au centre du flasque rotorique extérieur 6 pour accueillir le moyeu central 8, et comporte un bord circulaire 26. Les ailettes sont disposées orthogonalement à ce bord 26. A titre d'exemple, la hauteur des ailettes est d'environ 8 mm, un angle d'ouverture entre deux ailettes successives de 9 degrés et une épaisseur de 1,5mm. Leur longueur ne leur permet pas d'atteindre le bord du flasque rotorique extérieur 6.

La figure 5 fournit un schéma d'un principe connu et largement répandu d'alimentation et de commande du moteur. Le moteur synchrone à aimants 29 selon l'invention est alimenté par l'onduleur 27 en trois phases. L'onduleur, alimenté par la batterie 28 de trente-six volts, comprend six transistors MOS fournissant des quasi-créneaux de courant régulés par modulation linéaire d'impulsion MLI. Le signal de commande MLI 32, représentant le rapport cyclique de commande des transistors, est élaboré à partir d'un signal de consigne de courant et de la mesure de l'amplitude des courants dans chaque phase. Une logique de commande intégrée dans une EPROM 30 permet d'élaborer les six signaux de commande des transistors à partir du signal de commande MLI 32 et des signaux 33 fournis par les trois capteurs de position à effet Hall 3 (visible sur la figure 1).

La présente invention permet donc d'intégrer un moteur et son électronique de commande dans une roue avant ou arrière d'une bicyclette pour pourvoir cette dernière d'une assistance électrique au pédalage. Cette intégration est rendue possible car les dispositifs d'ailettes et de picots mis en oeuvre dans le cadre de la présente invention contribuent à une évacuation efficace de la chaleur produite dans le moteur.

Ce moteur roue peut également être monté sur d'autres engins qu'une bicyclette, tels que des fauteuils roulants, des tricycles ou encore des quadricycles.

Bien sûr, l'invention n'est pas limitée aux exemples qui viennent d'être décrits et de nombreux aménagements peuvent être apportés à ces exemples sans sortir du cadre de l'invention. En particulier, d'autres types d'aimant permanents que celui décrit peuvent être utilisés pour la réalisation du rotor extérieur.

## Revendications

1. Moteur roue, notamment pour bicyclette avec assistance électrique, comprenant un rotor externe (1) comportant deux flasques rotoriques respectivement intérieur (17) et extérieur (6), et un stator interne (2) possédant, en regard dudit flasque rotorique intérieur, un flasque statorique (16) supportant sur sa périphérie une partie radiale (5) comportant un circuit magnétique statorique (19) pourvu d'enroulements(18), **caractérisé en ce qu'**il comprend en outre des moyens (12) onduleurs d'alimentation desdits enroulements, qui sont montés sur la face interne du flasque statorique (16), et deux ensembles de picots (22, 23) respectivement rotoriques et statoriques s'étendant respectivement depuis la surface interne du flasque rotorique intérieur et depuis la surface externe du flasque statorique, lesdits ensembles de picots respectivement rotoriques et statoriques étant disposés de façon à réduire la barrière thermique existant entre le flasque rotorique intérieur et le flasque statorique.

2. Moteur selon la revendication précédente, **caractérisé en ce que** les picots (22) du flasque rotorique intérieur et les picots (23) du flasque statorique possèdent une longueur supérieure à la moitié de l'épaisseur de l'espace formé entre ledit flasque rotorique intérieur et ledit flasque statorique, de sorte que lesdits picots respectivement rotoriques et statoriques s'imbriquent tout en permettant le mouvement de rotation du rotor par rapport au stator.

3. Moteur selon l'une des revendications précédentes, **caractérisé en ce que** les picots sont perpendiculaires au flasque rotorique intérieur et au flasque statorique.

4. Moteur selon l'une quelconque des revendications précédentes, **caractérisé en ce que** les picots sur le flasque rotorique intérieur et sur le flasque statorique forment un ensemble de cercles concentriques de telle sorte que les cercles disposés sur ledit flasque s'intercalent dans les cercles disposés sur ledit flasque rotorique intérieur.

5. Moteur (1b) selon l'une quelconque des revendications précédentes, **caractérisé en ce que** les picots (23b) disposés sur le flasque statorique (16b) font partie intégrante dudit flasque statorique (16b).

6. Moteur (1b) selon l'une quelconque des revendications précédentes, **caractérisé en ce que** les picots (22b) disposés sur le flasque rotorique intérieur (17b) font partie intégrante dudit flasque rotorique intérieur (17b).

7. Moteur (1b) selon l'une quelconque des revendications précédentes, **caractérisé en ce que** le flasque statorique et la bande radiale sont réalisées en une seule pièce (16b).

8. Moteur selon l'une quelconque des revendications précédentes, **caractérisé en ce que** des ailettes (25) sont perpendiculairement disposées sur la surface interne du flasque rotorique extérieur (6).

9. Moteur selon la revendication 8, **caractérisé en ce que** les ailettes sont inscrites dans des plans passant par le centre du flasque rotorique extérieur.

10. Moteur selon l'une des revendications 8 ou 9, **caractérisé en ce que** la longueur des ailettes est telle qu'elles n'atteignent pas le bord extérieur du flasque rotorique extérieur.

11. Moteur selon l'une quelconque des revendications précédentes, **caractérisé en ce que** les picots et les ailettes sont en matériau métallique bon conducteur de la chaleur.

12. Bicyclette comprenant des moyens d'assistance au pédalage, des moyens pour commander ces moyens d'assistance et des moyens de stockage d'énergie électrique, **caractérisée en ce que** les moyens d'assistance comprennent au moins un moteur roue selon l'une quelconque des revendications précédentes.
